# EUROPEAN PATENT APPLICATION

(11) **EP 4 318 702 A1**
(43) Date of publication of application: **07.02.2024**
(21) Application number: 22775187.2
(22) Date of filing: 11.03.2022
(51) Int. Cl.: H01M 10/052, H01M 10/0587, H01M 10/613, H01M 10/643, H01M 10/6553

(54) **CYLINDRICAL BATTERY**

(30) Priority: 26.03.2021 JP 2021053009
(71) Applicant: Panasonic Energy Co., Ltd., Osaka 570-8511 (JP)
(72) Inventor: IMANISHI, Yosuke, Kadoma-shi, Osaka 571-0057 (JP)
(74) Representative: Novagraaf International SA
(86) International application number: PCT/JP2022/010826
(87) International publication number: WO 2022/202395

(57) **Abstract**

A cylindrical battery (10) comprises an electrode body (14) obtained by winding an elongated positive electrode (11) and an elongated negative electrode (12) with a separator (13) interposed therebetween. An exposed portion where a negative electrode current collector is exposed is arranged on at least a part of the outermost peripheral surface of the electrode body (14). Double sided tapes (39a, 39b) that fix an outermost peripheral portion (42) of the negative electrode (12) located on the outermost periphery of the electrode body (14) to an inner peripheral side portion (55) facing the inner peripheral surface of the outermost peripheral portion (42) are attached to the inner peripheral surface.

## Description

### TECHNICAL FIELD

The present disclosure generally relates to a cylindrical battery.

### BACKGROUND ART

Among conventional cylindrical batteries, there is a cylindrical battery provided with an exposed portion in which a negative electrode current collector is exposed to an outermost circumferential surface of an electrode assembly as disclosed in PATENT LITERATURE 1. In this cylindrical battery, the exposed portion contacts an exterior housing can to efficiently release heat generated in the event of an external short circuit via the exposed portion, whereby the safety is improved. Among cylindrical batteries, there is a cylindrical battery in which a terminal end of an outer circumferential surface of an outermost circumferential portion located at an outermost circumference in an electrode assembly is covered by a tape as disclosed in PATENT LITERATURE 2. In this cylindrical battery, the outermost circumference of the electrode assembly is fixed to the electrode assembly by the tape so that the electrode assembly can be inserted into the exterior housing can smoothly.

### CITATION LIST

### PATENT LITERATURE

PATENT LITERATURE 1: International Publication No. WO 2009/144919
PATENT LITERATURE 2: Japanese Unexamined Patent Application Publication No. 2009-199974

### SUMMARY

### TECHNICAL PROBLEM

When the terminal end of the electrode assembly is covered by the tape to smoothly insert the electrode assembly into the exterior housing can, the exposed portion of the negative electrode current collector disposed in the outermost circumferential surface of the electrode assembly is less likely to be brought into contact with the exterior housing can, which makes it impossible to effectively release the heat generated in the electrode assembly.

It is an advantage of the present disclosure to provide a cylindrical battery in which an electrode assembly can be easily inserted into an exterior housing can and heat generated in the electrode assembly can be released easily and effectively.

### SOLUTION TO PROBLEM

In order to solve the above-described problem, a cylindrical battery according to the present disclosure comprises an electrode assembly in which an elongated positive electrode and an elongated negative electrode are wound with a separator interposed between the positive electrode and the negative electrode, wherein the positive electrode includes an elongated positive electrode current collector, and a positive electrode mixture layer provided on at least one side wall of the positive electrode current collector, the negative electrode includes an elongated negative electrode current collector, and a negative electrode mixture layer provided on at least one side wall of the negative electrode current collector, an exposed portion in which the negative electrode current collector is exposed is disposed at at least a part of an outermost circumferential surface of the electrode assembly, and an inner circumferential surface of an outermost circumferential portion of the negative electrode located at an outermost circumference of the electrode assembly is provided with fixing means for fixing the outermost circumferential portion of the negative electrode to an inner circumferential side portion facing the inner circumferential surface.

### ADVANTAGEOUS EFFECTS OF INVENTION

In the cylindrical battery according to the present disclosure, the electrode assembly can be easily inserted into the exterior housing can and heat generated in the electrode assembly can be released easily and effectively.

### BRIEF DESCRIPTION OF DRAWING

FIG. 1 is an axial sectional view of a cylindrical battery according to an embodiment of the present disclosure.
FIG. 2A is a schematic diagram illustrating an outer circumferential surface of an end on a winding finish side of a negative electrode.
FIG. 2B is a schematic diagram illustrating an inner circumferential surface of the end on the winding finish side of the negative electrode.
FIG. 3 is a perspective view of an electrode assembly.
FIG. 4 is a perspective view of an electrode assembly of Example 2.
FIG. 5 is a perspective view of an electrode assembly of Example 4.
FIG. 6 is a perspective view of an electrode assembly of Example 5.
FIG. 7 is a schematic diagram illustrating an inner circumferential surface of an end on a winding finish side of a negative electrode in the electrode assembly of Example 5.
FIG. 8 is a perspective view of an electrode assembly of Comparative Example.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, for convenience of explanation, a sealing assembly 17 side in an axial direction (height direction) of a cylindrical battery 10 is defined as "upper", and a bottom side of an exterior housing can 16 in the axial direction is defined as "lower". Of the components described below, components that are not described in the independent claim indicating the highest level concept are arbitrary components, and are not essential components.

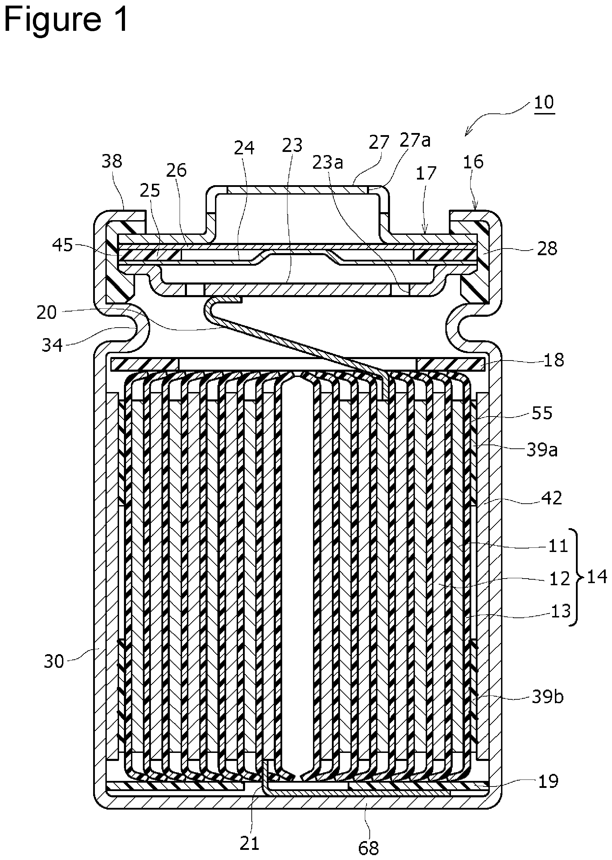

FIG. 1 is an axial sectional view of the cylindrical battery 10 according to an embodiment of the present disclosure. As illustrated in FIG. 1, the cylindrical battery 10 comprises a wound-type electrode assembly 14, a non-aqueous electrolyte (not illustrated), and a bottomed cylindrical metal exterior housing can 16 that houses the electrode assembly 14 and the non-aqueous electrolyte, and a sealing assembly 17 with which an opening of the exterior housing can 16 is capped. The electrode assembly 14 has a wound structure in which an elongate positive electrode 11 and an elongated negative electrode 12 are wound with two elongated separators 13 each interposed between the positive electrode 11 and the negative electrode 12.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween. The negative electrode 12 may include a winding start end of the electrode assembly 14. However, the separator 13 generally extends beyond a winding start side end of the negative electrode 12, and a winding start side end of the separator 13 serves as the winding start end of the electrode assembly 14.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, a positive electrode lead 20 is bonded to the positive electrode 11, and a negative electrode lead 21 is bonded on a winding start side in the longitudinal direction of the negative electrode 12. The cylindrical battery 10 has an insulating plate 18 above the electrode assembly 14, and has an insulating plate 19 below the electrode assembly 14. The positive electrode lead 20 extends toward the sealing assembly 17 through a through hole of the insulating plate 18, and the negative electrode lead 21 extends toward a bottom 68 of the exterior housing can 16 through a through hole of the insulating plate 19. The positive electrode lead 20 is connected to a lower surface of a bottom plate 23 of the sealing assembly 17, by means of welding or the like. A terminal cap 27 constituting a top plate of the sealing assembly 17 is electrically connected to the bottom plate 23, and serves as a positive electrode terminal. The negative electrode lead 21 is connected to an inner surface of the bottom 68 of the metal exterior housing can 16 by means of welding or the like, and the exterior housing can 16 serves as a negative electrode terminal.

The cylindrical battery 10 further comprises a resin gasket 28 disposed between the exterior housing can 16 and the sealing assembly 17. The gasket 28 is held between the exterior housing can 16 and the sealing assembly 17, and insulates the sealing assembly 17 from the exterior housing can 16. The gasket 28 has a role of a seal material for maintaining the airtightness of the inside of the battery, and a role as an insulating material for insulating the sealing assembly 17 from the exterior housing can 16. The exterior housing can 16 has an annular grooved portion 34 in one part in the axial direction.

The grooved portion 34 can be formed by, for example, recessing the one part of the side wall toward the radially inward side by a radially inward spinning process. The exterior housing can 16 has a bottomed cylindrical portion 30 including the grooved portion 34 and an annular shoulder 38. The bottomed cylindrical portion 30 houses the electrode assembly 14 and the non-aqueous electrolyte, and the shoulder 38 is bent to the radially inward side from an end on the opening side of the bottomed cylindrical portion 30 to extend radially inward. The shoulder 38 is formed when an upper end of the exterior housing can 16 is bent to the inner side to be caulked to a circumferential edge 45 of the sealing assembly 17. The sealing assembly 17 is fixed by caulking to the exterior housing can 16 with the gasket 28 interposed between the shoulder 38 and the grooved portion 34. In this way, an internal space of the cylindrical battery 10 is closed.

The sealing assembly 17 has a stacked structure of the bottom plate 23, a lower vent member 24, an insulating member 25, an upper vent member 26, and the terminal cap 27 in this order from the electrode assembly 14 side. Each member constituting the sealing assembly 17 has, for example, a disk shape or a ring shape, and each member except for the insulating member 25 is electrically connected to each other. The bottom plate 23 has at least one through hole 23a. The lower vent member 24 and the upper vent member 26 are connected to each other at respective centers thereof, and the insulating member 25 is interposed between the circumferential edges of the vent members 24 and 26.

If abnormal heat generation occurs in the cylindrical battery 10 and the internal pressure of the cylindrical battery 10 increases, the lower vent member 24 is deformed so as to push the upper vent member 26 upward to the terminal cap 27 side to break, resulting in cutting off of a current path between the lower vent member 24 and the upper vent member 26. If the internal pressure further increases, the upper vent member 26 breaks, and gas is discharged from a through hole 27a in the terminal cap 27. This gas discharge can prevent the cylindrical battery 10 from rupturing due to an excessive increase in internal pressure of the cylindrical battery 10, which makes it possible to improve the safety of the cylindrical battery 10.

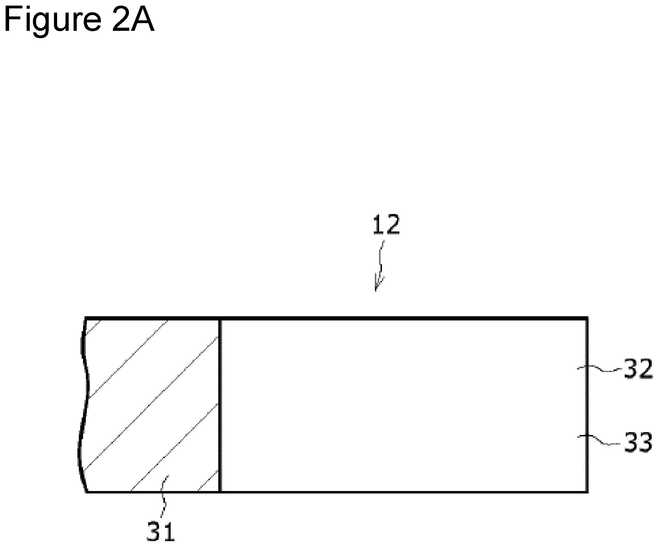

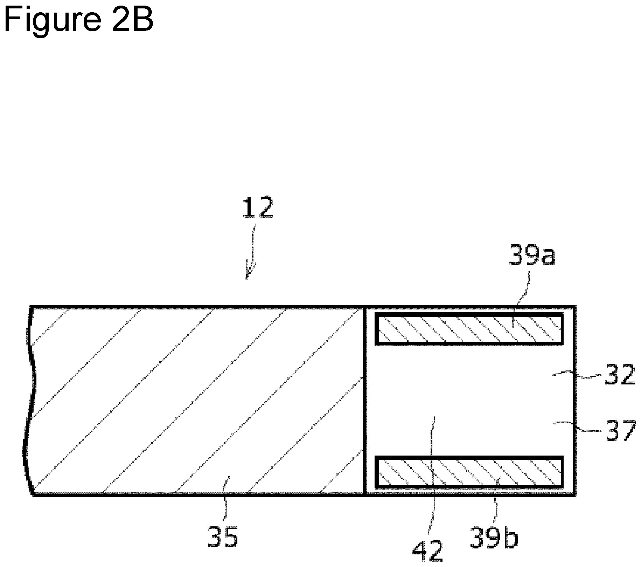

Next, there will be described a heat radiation structure of the cylindrical battery 10 and a fixing structure of an outermost circumferential portion 42 of the negative electrode 12 located at an outermost circumference of the electrode assembly 14. In the cylindrical battery 10, the negative electrode 12 is disposed at the outermost circumference of the electrode assembly 14. FIG. 2A is a schematic diagram illustrating an outer circumferential surface of an end on a winding finish side of the elongated negative electrode 12, and FIG. 2B is a schematic diagram illustrating an inner circumferential surface of the end on the winding finish side of the negative electrode 12. As illustrated in FIG. 2A, the end on the winding finish side of the negative electrode 12 has, on the outer circumferential surface thereof, an exposed portion 33 in which a negative electrode mixture layer 31 is not disposed and the negative electrode current collector 32 is exposed. The exposed portion 33 is disposed in the outermost circumferential surface of the electrode assembly 14.

On the other hand, as illustrated in FIG. 2B, double-sided tapes 39a and 39b as an example of fixing means are applied to the inner circumferential surface of the outermost circumferential portion 42 of the negative electrode 12 located at the outermost circumference of the electrode assembly 14. More specifically, the end on the winding finish side of the negative electrode 12 has, also on the inner circumferential surface thereof, an exposed portion 37 in which the negative electrode mixture layer 35 is not disposed and the negative electrode current collector 32 is exposed. The double-sided tapes 39a and 39b are applied to respective ends in the width direction (width direction of the negative electrode 12) of the exposed portion 37. Each of the double-sided tapes 39a and 39b extends along the longitudinal direction of the negative electrode 12.

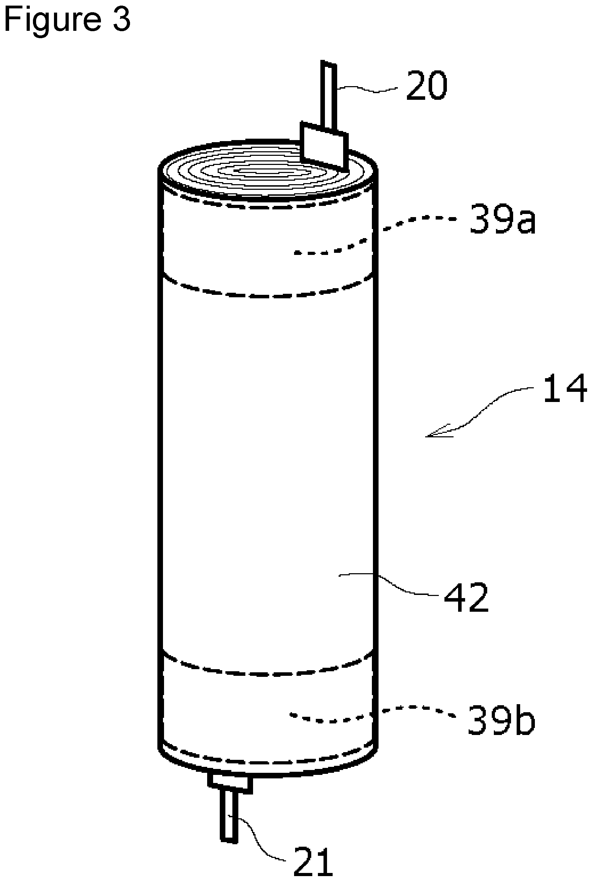

FIG. 3 is a perspective view of the electrode assembly 14. As illustrated in FIG. 3, the first double-sided tape 39a is applied to an area less than or equal to 15 mm from an upper end in the axial direction of the electrode assembly 14, and the second double-sided tape 39b is applied to an area less than or equal to 15 mm from a lower end in the axial direction of the electrode assembly 14. The double-sided tapes 39a and 39b are applied to the inner circumferential surface of the outermost circumferential portion 42 of the negative electrode 12 located at the outermost circumference of the electrode assembly 14 to thereby fix the outermost circumferential portion 42 of the negative electrode 12 to an inner circumferential side portion 55 (see FIG. 1) facing the inner circumferential surface of the outermost circumferential portion 42. In this way, the outermost circumferential portion 42 of the negative electrode 12 is fixed to the electrode assembly 14.

As described above, in the cylindrical battery 10 of the present disclosure, the exposed portion 33 in which the negative electrode current collector 32 is exposed is disposed at at least a part of the outermost circumferential surface of the electrode assembly 14. The cylindrical battery 10 further comprises, on the inner circumferential surface of the outermost circumferential portion 42 of the negative electrode 12 located at the outermost circumference of the electrode assembly 14, the double-sided tapes 39a and 39b for fixing the outermost circumferential portion 42 to the inner circumferential side portion 55 facing the inner circumferential surface of the outermost circumferential portion 42.

Since there is no tape for retaining the wound structure of the electrode assembly 14 in the outer circumferential surface of the electrode assembly 14, the exposed portion 33 disposed on the outermost circumferential surface of the electrode assembly 14 can be brought into contact with the inner surface of the exterior housing can 16 in a close contact state. Therefore, the heat generated in the electrode assembly 14 during the charging and discharging of the cylindrical battery 10 can be released efficiently via the exposed portion 33, whereby the electrode assembly 14 can be cooled efficiently. This can suppress the heat deterioration of the electrode assembly 14, and increase the capacity retention ratio when the charging and discharging are repeated.

When the exterior housing can 16 and the exposed portion 33 come into contact with each other, the end on the winding finish side of the elongate negative electrode current collector 32 is electrically connected to the exterior housing can 16 serving as the negative electrode terminal. Accordingly, the winding start side of the elongate negative electrode current collector 32 can be electrically connected to the exterior housing can 16 using the negative electrode lead 21, and the winding finish side of the negative electrode current collector 32 can be also electrically connected to the exterior housing can 16, which makes it possible to reduce the electric resistance of a pathway from the negative electrode 12 to the exterior housing can 16 and reduce power loss.

The outermost circumferential portion 42 of the negative electrode 12 located at the outermost circumference of the electrode assembly 14 can be fixed, by the double-sided tapes 39a and 39b, to the inner circumferential side portion 55 facing the inner circumferential surface of the outermost circumferential portion 42, whereby the wound structure of the electrode assembly 14 can be retained. Therefore, the electrode assembly 14 can be inserted into the exterior housing can 16 smoothly, and the mass production of the cylindrical battery 10 can be also improved.

When the electrode assembly is inserted into the exterior housing can, both ends in the axial direction of the outermost circumferential portion of the electrode assembly is likely to be caught in the exterior housing can. In contrast, as in the example illustrated in FIG. 3, when at least parts of the areas less than or equal to 15 mm from both ends in the axial direction of the electrode assembly 14 in the outermost circumferential portion 42 are fixed by the double-sided tapes 39a and 39b, the outermost circumferential portion 42 can be remarkably prevented from being caught in the exterior housing can 16. Therefore, the electrode assembly 14 can be inserted into the exterior housing can 16 more smoothly, and the mass production of the cylindrical battery 10 can be further improved.

Note that in the cylindrical battery of the present disclosure, the negative electrode 12 may be electrically connected to the exterior housing can 16 only by bringing the exposed portion 33 into contact with the exterior housing can 16 without providing the negative electrode lead. Alternatively, as in the cylindrical batteries of Examples 1 to 5 described below, the negative electrode lead bonded to the exposed portion of the negative electrode current collector provided at the end on the winding finish side in the longitudinal direction of the negative electrode may be bonded to the exterior housing can.

### Example 1

### [Example 1]

### (Production of Positive Electrode)

Mixing of 100 parts by mass of LiNi_{0.88}Co_{0.09}Al_{0.03}O₂, 1 part by mass of acetylene black, and 0.9 parts by mass of polyvinylidene fluoride was performed, and an appropriate amount of N-methyl-2-pyrrolidone was added thereto to prepare a positive electrode mixture slurry. Then, the positive electrode mixture slurry was applied on each surface of an elongate positive electrode current collector made with an aluminum foil having a thickness of 15 µm, and then the applied film was dried. The dried applied film was compressed by using a roller, and then cut to a predetermined electrode size to produce a positive electrode (0.144 mm thick, 62.6 mm wide, and 861 mm long) in which a positive electrode mixture layer was formed on each surface of the positive electrode current collector. An exposed portion in which the positive electrode current collector was exposed without providing the positive electrode mixture layer was provided at a center in a longitudinal direction of the positive electrode, and a positive electrode lead made of aluminum was welded to the exposed portion.

### [Production of Negative Electrode]

Mixing of 95 parts by mass of graphite powder, 5 parts by mass of Si oxide, 1 part by mass of sodium carboxymethyl cellulose, and 1 part by mass of styrene-butadiene rubber was performed, and an appropriate amount of water was added thereto to prepare a negative electrode mixture slurry. Then, the negative electrode mixture slurry was applied on each surface of an elongate negative electrode current collector made with a copper foil having a thickness of 8 µm, and then the applied film was dried. The dried applied film was compressed by using a roller, and then cut to a predetermined electrode size to produce a negative electrode (0.160 mm thick, 64.2 mm wide, and 959 mm long) in which a negative electrode mixture layer was formed on each surface of the negative electrode current collector. An exposed portion in which the negative electrode current collector was exposed without providing the negative electrode mixture layer was provided at one end in a longitudinal direction of the negative electrode, and a negative electrode lead made of nickel was welded to the exposed portion.

### [Production of Wound-Type Electrode Assembly]

The above-described positive electrode and negative electrode were wound with the micro-porous membrane separator made of polyethylene interposed therebetween to produce a wound-type electrode assembly. The entire area of an outermost circumferential surface of the electrode assembly was the exposed portion in which the negative electrode current collector was exposed. A double-sided tape of 9 mm wide, 15 µm thick, and 62 mm long was applied to an area less than or equal to 15 mm from each end in an axial direction in an inner circumferential surface of the outermost circumferential portion of the negative electrode disposed at an outermost circumference of the electrode assembly in the same manner as the electrode assembly 14 illustrated in FIG. 3, to retain a wound structure of the electrode assembly. For the double-sided tape, a polypropylene tape in which a base layer contains polypropylene was used having a thickness of 30 µm, a width (length along an up-down direction of the electrode assembly) of 9 mm, and a length (length along a circumferential direction of the electrode assembly) of 6 mm.

### [Preparation of Non-Aqueous Electrolytic Solution]

Ethylene carbonate (EC) and dimethyl carbonate (DMC) were mixed together in a volume ratio of EC : DMC = 3:7. To the mixed solvent, vinylene carbonate of 5% by mass was added, and LiPF₆ was dissolved with a concentration of 1.5 mol/L, thereby preparing a non-aqueous electrolytic solution.

### [Production of Cylindrical Battery]

Insulating plates were disposed above and below the electrode assembly, the negative electrode lead was welded to the exterior housing can, the positive electrode lead was welded to a sealing plate having an inner pressure sensitive safety vent, and they were housed in a battery case. Then, the non-aqueous electrolyte solution was injected into the battery case by a reduced pressure method. Finally, the sealing plate was caulked and fixed to an opening end of the exterior housing can with a gasket interposed therebetween, thereby producing a cylindrical battery as a non-aqueous electrolyte secondary battery. The initial capacity of the produced cylindrical battery was 4600 mAh.

### [Example 2]

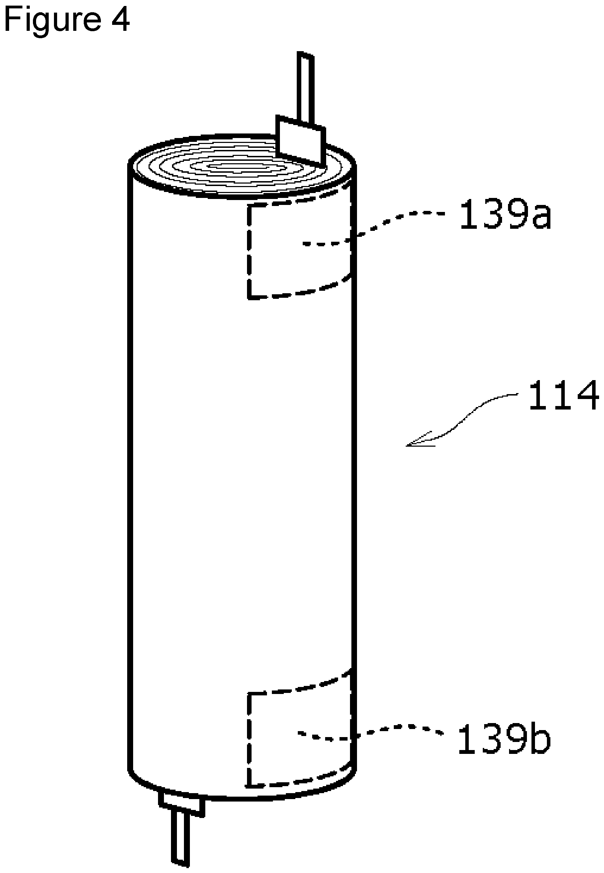

As illustrated in FIG. 4, a cylindrical battery according to Example 2 was produced in the same manner as in Example 1 except that an electrode assembly 114 was used in which double-sided tapes 139a and 139b whose length was changed to 10 mm were applied, toward a start end of the negative electrode, from a finish end of the inner circumferential surface of the outermost circumferential portion of the negative electrode disposed at the outermost circumference of the electrode assembly 114.

### [Example 3]

A cylindrical battery according to Example 3 was produced in the same manner as in Example 2 except that an electrode assembly was used in which each double-sided tape was applied, toward a start end of the negative electrode, from a position away from a finish end of the outermost circumferential portion of the negative electrode by 20 mm toward the start end.

### [Example 4]

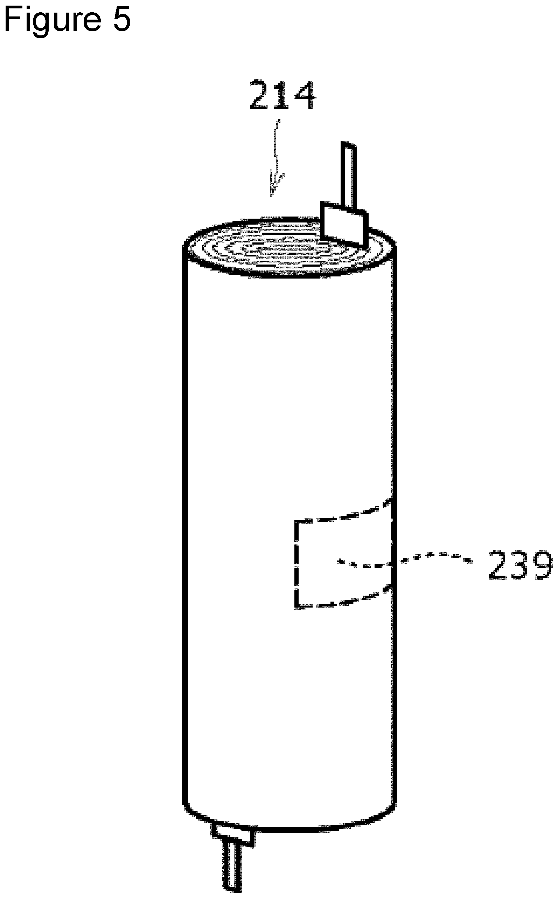

As illustrated in FIG. 5, a cylindrical battery according to Example 4 was produced in the same manner as in Example 2 except that an electrode assembly 214 was used in which a double-sided tape 239 was applied to only one position at a center in the axial direction instead of both ends in the axial direction of the inner circumferential surface of the outermost circumferential portion.

### [Example 5]

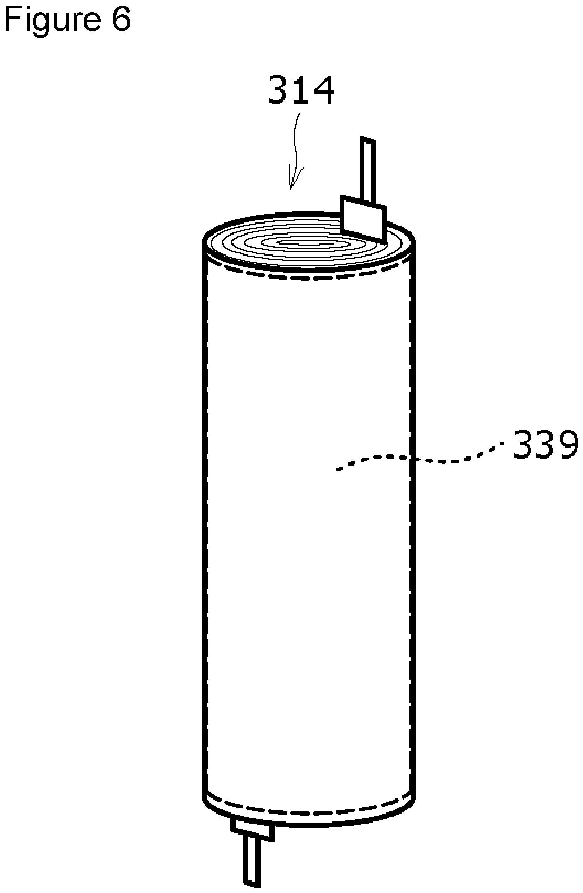

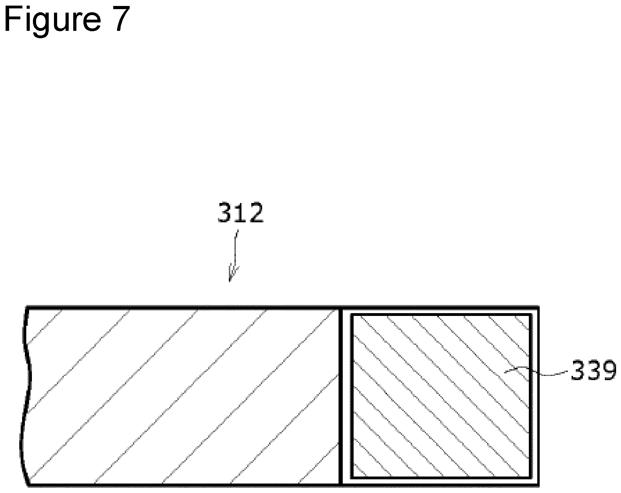

As illustrated in FIGS. 6 and 7, a cylindrical battery according to Example 5 was produced in the same manner as in Example 1 except that an electrode assembly 314 was used in which a double-sided tape 339 whose width was changed to 62 mm was applied to a substantially entire region of the inner circumferential surface of the outermost circumferential portion of a negative electrode 312 disposed at the outermost circumference of the electrode assembly 314.

### [Comparative Example]

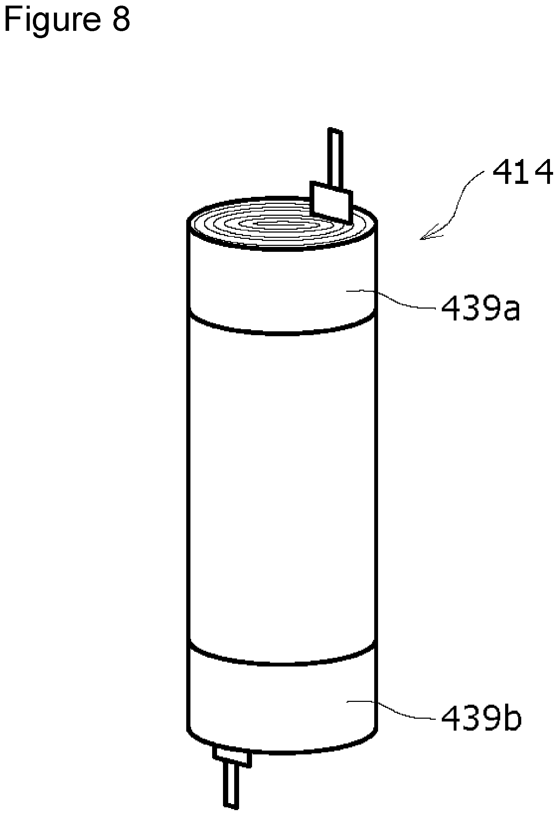

As illustrated in FIG. 8, a cylindrical battery according to Comparative Example was produced in the same manner as in Example 1 except that an electrode assembly 414 was used in which single-sided tapes 439a and 439b made of polypropylene (PP) having a width of 9 mm, a thickness of 3 mm, and a length of 62 mm were applied to both ends in the axial direction of the outer circumferential surface of the outermost circumferential portion without a double-sided tape being applied to the inner circumferential surface of the outermost circumferential portion.

### [Evaluation of Heat Dissipation Capability]

Each cylindrical battery produced underwent constant-current charging at 1380 mA (0.3 It) under an environment of 25°C until a voltage reached 4.2 V, followed by constant-voltage charging at 4.2 V until an end current reached 92 mA. After resting for 20 minutes, the cylindrical battery underwent constant-current discharging at a discharge current at 4600 mA (1 It), and a maximum temperature of the cylindrical battery during discharging was detected. Thus, the heat dissipation capability of the cylindrical battery was evaluated using the maximum temperature during discharging as an index. The evaluation results are shown in Table 1.

**[Table 1]**

| | Tape | | | | | |
|---|---|---|---|---|---|---|
| | Type | Position (axial dire ction) | Exposur e | Width (m m) | Length (mm) | Maximum temperatur e during d ischarging (°C) |
| Example 1 | Double-sided tape | Both ends | No | 9 | 62 | 39 |
| Example2 | Double-sided tape | Both ends | No | 9 | 10 | 39 |
| Example3 | Double-sided tape | Both ends | No | 9 | 10 | 39 |
| Example4 | Double-sided tape | Center | No | 9 | 10 | 49 |
| Example5 | Double-sided tape | Entire regi on | No | 60 | 62 | 39 |
| Comparat ive Exam ple | Single-sided tape | Both ends | Yes | 9 | 62 | 43 |

As shown in Table 1, when each cylindrical battery of Examples 1 to 5 is compared with the cylindrical battery of Comparative Example, the maximum temperature during discharging is lower and is more superior in the heat dissipation capability. According to the cylindrical battery of the present disclosure, the electrode assembly can be inserted into the exterior housing can smoothly and heat generated in the electrode assembly can be released effectively.

The reason why the maximum temperature during discharging of each cylindrical battery of Examples 1 to 5 is lower is considered to be because the tape as fixing means is not exposed to the outer circumferential surface of the outermost circumferential portion unlike the cylindrical battery of Comparative Example, which does not prevent heat from transferring from the exposed portion of the negative electrode current collector to the exterior housing can, and the exposed portion of the negative electrode current collector and the exterior housing can can be in close contact with each other uniformly.

The reason why the maximum temperature during discharging of the cylindrical battery of Example 5 is the lowest is considered because the double-sided tape was applied to a substantially entire region of the inner circumferential surface of the outermost circumferential portion of the negative electrode, whereby the exposed portion of the negative electrode current collector and the exterior housing can were in close contact with each other more uniformly.

The present disclosure is not limited to the above embodiment and modified examples thereof, and various improvements and changes are possible within the matters described in the claims of the present application and the scope of equivalence of claims.

For example, in the above embodiment, there has been described a case where the positive electrode mixture layer is provided on each side wall of the positive electrode current collector and the negative electrode mixture layer is provided on each side wall of the negative electrode current collector. However, a configuration may be adopted in which the positive electrode mixture layer is provided on only one side wall of the positive electrode current collector and the negative electrode mixture layer is provided on only one side of the negative electrode current collector.

There has been described a case where the inner circumferential surface of the outermost circumferential portion 42 of the negative electrode 12 located at the outermost circumference of the electrode assembly 14 is fixed to the inner circumferential side portion 55 facing the outermost circumferential portion 42 by the double-sided tapes 39a and 39b, 139a and 139b, 239, and 339. However, as such fixing means, an adhesive may be adopted instead of the double-sided tape. Here, the form of the adhesive includes a form dried or solidified by chemical reaction, and also include the other forms such as a non-solidified form. The adhesive may be any adhesive that can fix the outermost circumferential portion of the negative electrode located at the outermost circumference of the electrode assembly to the inner circumferential side portion facing the inner circumferential surface of the outermost circumferential portion. Examples of the adhesive include an acrylic adhesive, a silicon adhesive, or a rubber adhesive. The fixing means are not limited to the double-sided tape and the adhesive, and may be constituted by any member that can fix the outermost circumferential portion of the negative electrode located at the outermost circumference of the electrode assembly to the inner circumferential side portion facing the inner circumferential surface of the outermost circumferential portion.

### REFERENCE SIGNS LIST

10 Cylindrical battery, 11 Positive electrode, 12, 312 Negative electrode, 13 Separator, 14, 114, 214, 314 Electrode assembly, 16 Exterior housing can, 17 Sealing assembly, 18, 19 Insulating plate, 20 Positive electrode lead, 21 Negative electrode lead, 27 Terminal cap, 28 Gasket, 30 Bottomed cylindrical portion, 31 Negative electrode mixture layer, 32, 332 Negative electrode current collector, 33, 333 Exposed portion, 34 Grooved portion, 35 Negative electrode mixture layer, 37 Exposed portion, 39a First double-sided tape, 39b Second double-sided tape, 42 Outermost circumferential portion, 55 Inner circumferential side portion, 139a, 139b, 239, 339 Double-sided tape

## Claims

1. A non-aqueous electrolyte secondary battery, comprising:
an electrode assembly in which an elongated positive electrode and an elongated negative electrode are wound with a separator interposed between the positive electrode and the negative electrode, wherein
the positive electrode includes an elongated positive electrode current collector, and a positive electrode mixture layer provided on at least one side wall of the positive electrode current collector,
the negative electrode includes an elongated negative electrode current collector, and a negative electrode mixture layer provided on at least one side wall of the negative electrode current collector,
an exposed portion in which the negative electrode current collector is exposed is disposed at at least a part of an outermost circumferential surface of the electrode assembly, and
an inner circumferential surface of an outermost circumferential portion of the negative electrode located at an outermost circumference of the electrode assembly is provided with fixing means for fixing the outermost circumferential portion to an inner circumferential side portion facing the inner circumferential surface.

2. The non-aqueous electrolyte secondary battery according to claim 1, wherein
the fixing means are double-sided tape.

3. The non-aqueous electrolyte secondary battery according to claim 1, wherein
the fixing means are an adhesive.

4. The non-aqueous electrolyte secondary battery according to any one of claims 1 to 3, wherein
the fixing means are provided at at least a part of an area less than or equal to 1.5 mm from each side in an axial direction of the electrode assembly in an inner circumferential surface of the outermost circumferential portion.
